# EUROPÄISCHE PATENTSCHRIFT

(11) **EP 3 434 352 B1**
(45) Veröffentlichungstag und Bekanntmachung des Hinweises auf die Patenterteilung: **09.09.2020**
(21) Anmeldenummer: 18176441.6
(22) Anmeldetag: 07.06.2018
(51) Int. Cl.: B01D 46/00

(54) **VORRICHTUNG FÜR DIE SEPARATION UND SICHERE AUFNAHME VON PARTIKELN**
DEVICE FOR SEPARATING AND SECURE GATHERING OF PARTICLES
DISPOSITIF DE SÉPARATION ET DE RÉCEPTION SÉCURISÉE DE PARTICULES

(30) Priorität: 28.07.2017 DE 102017213042
(43) Veröffentlichungstag der Anmeldung: 30.01.2019
(73) Patentinhaber: ULT AG, 02708 Löbau (DE)
(72) Erfinder: Bandowski, Sven, 01127 Dresden (DE); Reichmann, Andreas, 02788 Hirschfelde OT Wittgensdorf (DE); Schütze, Ronny, 02763 Zittau (DE); Oemichen, Lars, 01217 Dresden (DE)
(74) Vertreter: Pfenning, Meinig & Partner mbB

(56) Entgegenhaltungen:
- WO-A2-2010/026396
- WO-A2-2016/079494
- DE-A1-102012 004 587
- US-A- 4 476 608
- US-A- 5 772 879

## Beschreibung

Die Erfindung betrifft eine Vorrichtung für die Separation und sichere Aufnahme von Partikeln.

Insbesondere bei einem generativen pulverbasierten Herstellungsverfahren mit einem auslenkbaren Energiestrahl, insbesondere einem Laserstrahl in einem Pulverbett gebildet und mit einem abgesaugten Rohgas mindestens einem Filterelement zugeführt werden, wobei sich die mit dem mindestens einen Filterelement separierten Partikel am Boden eines vertikal unterhalb des mindestens einen Filterelements angeordneten Sammelbehälters ablagern.

Bei diesen pulverbasierten Herstellungsverfahren werden Partikel durch die Energie lokal definiert miteinander verschmolzen oder versintert. Dabei bilden sich aus temporär in die Gasphase überführtem Metall sehr feine Partikel mit sehr kleiner Partikelgröße. Sie werden mit dem aus der Vorrichtung zur Herstellung der Bauteile abgesaugten Rohgasstrom zu einer Separationseinrichtung geführt und aus dem Rohgas mit einem Filterelement separiert und dann in einem Behälter gelagert. Insbesondere wegen der kleinen Partiklegröße sind die Partikel chemisch sehr reaktiv und es kommt bei Kontakt mit Sauerstoff zu spontanen Oxidationsreaktionen. Um diesem Problem entgegenzutreten, erfolgt die Absaugung des Rohgases und auch die Lagerung der separierten metallischen Partikel in einer sauerstofffreien inerten Atmosphäre. Üblicherweise wird die Atmosphäre mit Argon, Stickstoff oder ein inertes Gasgemisch als ein geeignetes Inertgas gebildet, was mit entsprechend hohen Kosten verbunden ist.

Bei Sammelbehältern deren Kapazität erreicht worden ist, besteht das Problem, dass entweder eine Inertgasatmosphäre ständig aufrechterhalten werden muss oder ein Zugang von Sauerstoff zu den im Sammelbehälter enthaltenen Partikeln vermieden werden soll. Dies soll zumindest so lange der Fall sein, bis eine gefahrlose Entsorgung der im Sammelbehälter enthaltenen Partikel möglich geworden ist.

So sind aus WO 2016/079494 A2 eine Vorrichtung und ein Verfahren zur additiven Fertigung bekannt, bei der eine Separation von Partikeln erfolgt.

DE 10 2012 004 587 A1 betrifft eine Filtereinrichtung, die an eine Lasersinter- oder Laserschmelzanlage angeschlossen werden kann.

Aus US 4 476 608 A ist eine Vorrichtung zur Entfernung von Asche bekannt.

Ein selbstreinigender Filter für Fluide ist in US 5 772 879 A beschrieben.

Eine Filteranordnung ist in WO 2010/026396 A2 offenbart.

Es ist daher Aufgabe der Erfindung, Möglichkeiten für eine gefahrlose Lagerung bzw. Aufbewahrung während und im Anschluss an eine Separation von Partikeln aus einem Rohgas anzugeben.

Erfindungsgemäß wird diese Aufgabe mit einer Vorrichtung, die die Merkmale des Anspruchs 1 aufweist, gelöst. Vorteilhafte Ausgestaltungen und Weiterbildungen der Erfindung können mit in untergeordneten Ansprüchen bezeichneten Merkmalen Realisiert werden.

Bei der erfindungsgemäßen Vorrichtung für die Separation und sichere Aufnahme von Partikeln, die aus einem Partikel enthaltenden Rohgas separiert werden sollen, ist in einem Sammelbehälter mindestens ein Filterelement mit einem für die Separation von Partikeln ausgebildeten Filtermedium angeordnet. Desweiteren sind am Sammelbehälter an der oberen Stirnwand ein erstes kombiniertes Anschluss- und Verschlusselement für den Eintritt von Partikel enthaltendem Rohgas und ein zweites kombiniertes Anschluss- und Verschlusselement für die Abführung von partikelfreiem Gas so angeordnet, dass das mindestens eine Filterelement mit Filtermedium zwischen der Zuführung für Rohgas mit dem ersten kombinierten Anschluss- und Verschlusselement und der Abführung für partikelfreies Gas mit dem zweiten kombinierten Anschluss- und Verschlusselement angeordnet ist. Außerdem sind eine Leitung zur Zuführung von Rohgas und eine Leitung an das erste kombinierte Anschluss- und Verschlusselement und eine Leitung für die Abführung von partikelfreiem Gas an das zweite kombinierte Anschluss- und Verschlusselement lösbar befestigbar.

Jeweils eine Leitung ist während der Separation an das erste und das zweite Anschluss- und Verschlusselement angeschlossen. Gleichzeitig sind die Verschlüsse, beispielsweise Ventile geöffnet, so dass Rohgas über eine Leitung durch das erste Anschluss- und Verschlusselement in den Sammelbehälter einströmen und von Partikeln befreites Gas aus dem zweiten Anschluss- und Verschlusselement aus dem Sammelbehälter ausströmen kann. Ein Verschluss ist sowohl an dem ersten, wie auch dem zweiten kombinierten Anschluss- und Verschlusselement vorhanden. Während der Separation ist ein Verdichter (Unterdruckerzeuger, Ventilator eine dazu geeignete Strömungsmaschine) mit seiner Saugseite an die Leitung, die mit dem zweiten kombinierten Anschluss- und Verschlusselement verbunden ist, angeschlossen und erzeugt einen Druck im Sammelbehälter, der kleiner als der Umgebungsdruck ist.

Ist der Sammelbehälter bis zu einem vorgegebenen Maß mit Partikeln gefüllt können die Verschlüsse der beiden Anschluss- und Verschlusselemente geschlossen und der Sammelbehälter so gefahrlos zu einer geeigneten Entsorgung transportiert oder bis dahin zwischen gelagert werden.

Das mindestens eine Filterelement sollte als herkömmliche Filterpatrone ausgebildet und das zweite kombiniertes Anschluss- und Verschlusselement im Inneren des Filterelements angeordnet sein bzw. zumindest dort einmünden.

Das Rohgas sollte über das erste kombinierte Anschluss- und Verschlusselement tangential in das Innere des Sammelbehälters gerichtet sein, so dass sich eine im Sammelbehälter um das Filterelement zirkulierende Strömung ausbilden kann. Das erste kombinierte Anschluss- und Verschlusselement kann dazu radial außen in einem Abstand von der mittleren Längsachse des Sammelbehälters bzw. in einem größeren Abstand als das zweite kombinierte Anschluss- und Verschlusselement angeordnet sein.

Es kann auch ein Anschluss mit Düse am Sammelbehälter so angeordnet sein, dass eine Druckstossabreinigung oder Rotationsdüsenabreinigung des Filtermediums erreichbar ist. Der Anschluss mit Düse kann dabei vorteilhaft im Inneren einer Filterpatrone angeordnet sein bzw. dort münden.

Das erste und das zweite kombinierte Anschluss- und Verschlusselement sollen unterschiedlich gestaltet und/oder dimensioniert sein. Dadurch kann ein Vertauschen der unterschiedlichen Leitungen für Rohgas und von Partikeln befreitem Gas vermieden werden. Vorteilhaft können sie als Kamlock-Anschluss ausgebildet sein. Dadurch wirkt sich die Kombination von Anschlussmöglichkeit einer Leitung mit Ventil günstig aus.

Für einen erleichterten Transport können am Boden des Sammelbehälters mindestens zwei Rollen oder Räder angeordnet sein.

Am Sammelbehälter kann mindestens ein Füllstandssensor, insbesondere mindestens ein kapazitiver Sensor angeordnet sein. Ein oder mehrere Füllstandssensoren können in vorgebbaren insbesondere unterschiedlichen Abständen zum Boden des Sammelbehälters angeordnet sein, so dass mit von ihnen generierten Signalen Kenntnis über den jeweiligen Füllstand erlangt bzw. ein Ende der Separation eingeleitet werden kann, wenn der Sammelbehälter ausreichend befüllt ist. In jedem Fall sollten möglichst Füllstandsensoren eingesetzt sein, die den Füllstand berührunglos detektieren können, was bei kapazitiven Sensoren der Fall ist.

Vorteilhaft kann an das erste kombinierte Anschluss- und Verschlusselement oder ein drittes kombiniertes Anschluss- und Verschlusselement, das am Sammelbehälter angeordnet ist, eine Leitung anschließbar sein, mit der bei befülltem Sammelbehälter ein inertes Medium in den Sammelbehälter zuführbar ist. Ein inertes Medium kann dabei insbesondere eine Flüssigkeit oder ein pulverförmiger Werkstoff sein, die/der zumindest nicht exotherm mit im Sammelbehälter enthaltenen Partikeln reagiert. Mit dem eingeführten Medium kann das Gas, insbesondere Argon aus dem Sammelbehälter bevorzugt über das zweite kombinierte Anschluss- und Verschlusselement verdrängt und so der Sammelbehälter nach dessen vollständigem Verschluss gegenüber der Umgebungsatmosphäre bis zur gefahrlosen Entsorgung gelagert werden.

Nachfolgend soll die Erfindung beispielhaft näher erläutert werden.

### Dabei zeigen:

- Figur 1: eine Schnittdarstellung durch ein Beispiel einer erfindungsgemäßen Vorrichtung,
- Figur 2: eine um 180 ° gedrehte Darstellung des in Figur 1 gezeigten Beispiels und
- Figur 3: das Beispiel nach Figur 1 mit eingezeichneter Strömungsführung des Rohgases im Sammelbehälter.

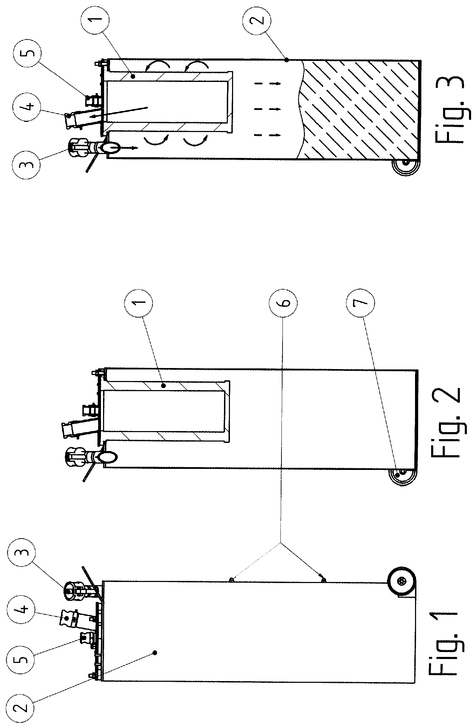

Bei dem in den Figuren 1 bis 3 gezeigten Beispiel sind an der oberen Stirnseite des Sammelbehälters 2 ein erstes kombinierte Anschluss- und Verschlusselement 3 und ein zweites kombiniertes Anschluss- und Verschlusselement 4 angebracht. An das erste kombinierte Anschluss- und Verschlusselement 3 kann eine nicht gezeigte Leitung für die Zuführung von Partikeln enthaltendem Rohgas angeschlossen werden.

An das zweite kombinierte Anschluss- und Verschlusselement 4 kann eine Leitung für von Partikeln befreites Gas angeschlossen sein. Insbesondere dann, wenn das Rohgas mit einem inerten Gas, wie Argon gebildet ist, kann das Gas während des Herstellungsprozesses und der Separation im Kreislauf geführt werden.

Im Sammelbehälter ist eine herkömmliche Filterpatrone als Filterelement 1 unterhalb der oberen Stirnwand im Sammelbehälter 2 angeordnet. Im Inneren des Filterelements 1 mündet das zweite kombinierte Anschluss- und Verschlusselement 4. Wie man insbesondere Figur 3 entnehmen kann, zirkuliert das über das erste kombinierte Anschluss- und Verschlusselement 3 einströmende Rohgas um das Filterelement 1 außen herum. Dabei können größere Partikel bereits gravitationskraftbedingt in Richtung Boden des Sammelbehälters 2 fallen. Kleinere und leichtere Partikel werden zum Filtermedium des Filterelements 1 gesaugt und dort zurück gehalten, dass von Partikeln befreite Gas durchdringt das Filtermedium und kann über das zweite kombinierte Anschluss- und Verschlusselement 4 aus dem Sammelbehälter 2 abgeführt werden.

An der oberen Stirnwand im Bereich des Inneren des Filterelements 2 mündet ein Anschluss 5 mit Düse, über die z.B. ein inertes Gas in Form von Druckstößen zur Abreinigung von am Filtermedium anhaftenden Partikeln eingeführt werden kann. Die dabei abfallenden Partikel bewegen sich dann im freien Fall in Richtung Boden des Sammelbehälters 2.

Bei diesem Beispiel sind am Boden des Sammelbehälters 2 zwei Rollen 7 in einem Abstand zueinander befestigt. Wird der Sammelbehälter 2 nur um wenige Grade gekippt kann der entsprechend geneigte Sammelbehälter 2 durch Ziehen leicht transportiert werden.

Die Figur 1 zeigt zwei Füllstandssensoren 6, die in unterschiedlichen Abständen zum Boden des Sammelbehälters 2 angeordnet und als kapazitive Sensoren ausgebildet sind. Zumindest der vertikal oben angeordnete Füllstandssensor 6 sollte so ausgebildet sein, dass er bei Erreichen des entsprechenden Füllstands im Sammelbehälter 2 ein Signal generiert, mit dem ein Austausch der Vorrichtung gegen eine neue leere Vorrichtung initiiert wird.

Mit Figur 3 kann verdeutlicht werden, dass das erste kombinierte Anschluss- und Verschlusselement 3 in einem Abstand zur Innenwand des Sammelbehälters 2 und zu dessen mittleren Längsachse angeordnet und seine Mündung in den Sammelbehälter 2 so ausgerichtet sein kann, dass eine tangentiale zirkulare Strömung um das Filterelement 1 herum im Inneren des Sammelbehälters 2 erreicht werden kann.

## Patentansprüche

1. Vorrichtung für die Separation und sichere Aufnahme von Partikeln, die aus einem Partikel enthaltenden Rohgas separiert werden sollen, dabei ist in einem Sammelbehälter (2) mindestens ein Filterelement (1) mit einem für die Separation von Partikeln ausgebildeten Filtermedium angeordnet, des weiteren sind am Sammelbehälter an der oberen Stirnwand ein erstes kombiniertes Anschluss- und Verschlusselement (3) für den Eintritt von Partikel enthaltendem Rohgas und ein zweites kombiniertes Anschluss- und Verschlusselement (4) für die Abführung von partikelfreiem Gas so angeordnet, dass das mindestens eine Filterelement (1) mit Filtermedium zwischen der Zuführung für Rohgas mit dem ersten kombinierten Anschluss- und Verschlusselement (3) und der Abführung für partikelfreies Gas mit dem zweiten kombinierten Anschluss- und Verschlusselement (4) angeordnet ist und eine Leitung zur Zuführung von Rohgas an das erste kombinierte Anschluss- und Verschlusselement (3) und eine Leitung für die Abführung von partikelfreiem Gas an das zweite kombinierte Anschluss- und Verschlusselement (4) lösbar befestigbar sind,
**dadurch gekennzeichnet dass**
das erste und das zweite kombinierte Anschluss- und Verschlusselement (3, 4) unterschiedlich gestaltet und/oder dimensioniert sind.

2. Vorrichtung nach Anspruch 1, **dadurch gekennzeichnet, dass** das mindestens eine Filterelement (1) als Filterpatrone ausgebildet und das zweite kombiniertes Anschluss- und Verschlusselement (4) in das Innere des Filterelements (1) einmündet.

3. Vorrichtung nach einem der vorhergehenden Ansprüche, **dadurch gekennzeichnet, dass** Rohgas über das erste kombinierte Anschluss- und Verschlusselement (3) tangential in das Innere des Sammelbehälters (2) gerichtet ist.

4. Vorrichtung nach einem der vorhergehenden Ansprüche, **dadurch gekennzeichnet, dass** ein Anschluss (5) mit Düse am Sammelbehälter (2) so angeordnet ist, dass eine Druckstossabreinigung des Filtermediums erreichbar ist.

5. Vorrichtung nach einem der vorhergehenden Ansprüche, **dadurch gekennzeichnet, dass** das erste und das zweite kombinierte Anschluss- und Verschlusselement (3, 4) als Kamlock-Anschluss ausgebildet sind.

6. Vorrichtung nach einem der vorhergehenden Ansprüche, **dadurch gekennzeichnet, dass** am Boden des Sammelbehälters (2) mindestens zwei Rollen oder Räder (7) angeordnet sind.

7. Vorrichtung nach einem der vorhergehenden Ansprüche, **dadurch gekennzeichnet, dass** am Sammelbehälter (2) mindestens ein Füllstandssensor (6), insbesondere mindestens ein kapazitiver Sensor angeordnet ist.

8. Vorrichtung nach einem der vorhergehenden Ansprüche, **dadurch gekennzeichnet, dass** mit dem mindestens einen Füllstandssensor bei Erreichen eines vorgebbaren Füllstandes ein Signal generierbar ist.

9. Vorrichtung nach einem der vorhergehenden Ansprüche, **dadurch gekennzeichnet, dass** an das erste kombinierte Anschluss- und Verschlusselement (3) oder ein drittes kombiniertes Anschluss- und Verschlusselement, das am Sammelbehälter (2) angeordnet ist, eine Leitung anschließbar ist, mit der bei befülltem Sammelbehälter ein inertes Medium in den Sammelbehälter (2) zuführbar ist.

## Claims

1. Apparatus for the separation and secure accommodation of particles which are to be separated from a particle-containing raw gas, where at least one filter element (1) with a filter medium designed for the separation of particles is arranged in a collecting container (2), there being additionally arranged on the collecting container, on the upper end wall, a first combined connection and sealing element (3) for the entry of particle-containing raw gas and a second combined connection and sealing element (4) for the discharge of particle-free gas, the arrangement being such that the at least one filter element (1) with filter medium is arranged between the raw gas feed facility with the first combined connection and sealing element (3) and the particle-free gas discharge facility with the second combined connection and sealing element (4), a line for feeding raw gas being releasably attachable to the first combined sealing and connection element (3) and aligned for discharging particle-free gas being releasably attachable to the second combined connection and sealing element (4),
**characterized in that**
the first and second combined connection and sealing elements (3, 4) are different in design and/or dimensions.

2. Apparatus according to Claim 1, **characterized in that** the at least one filter element (1) is designed as a filter cartridge and the second combined connection and sealing element (4) opens out into the interior of the filter element (1).

3. Apparatus according to either of the preceding claims, **characterized in that** raw gas is directed tangentially into the interior of the collecting container (2) via the first combined connection and sealing element (3).

4. Apparatus according to any of the preceding claims, **characterized in that** a connection (5) with nozzle is arranged on the collecting container (2) in such a way that the filter medium can be cleaned off by pressure surge.

5. Apparatus according to any of the preceding claims, **characterized in that** the first and second combined connection and sealing elements (3, 4) are designed as camlock connections.

6. Apparatus according to any of the preceding claims, **characterized in that** at least two rollers or wheels (7) are arranged on the base of the collecting container (2).

7. Apparatus according to any of the preceding claims, **characterized in that** at least one level sensor (6), more particularly at least one capacitive sensor, is arranged on the base of the collecting container (2) .

8. Apparatus according to any of the preceding claims, **characterized in that** a signal can be generated with the at least one level sensor when a pre-definable fill level is reached.

9. Apparatus according to any of the preceding claims, **characterized in that** to the first combined connection and sealing element (3) or to a third combined connection and sealing element which is arranged on the collecting container (2) it is possible to connect a line with which an inert medium can be fed into the collecting container (2) when the collecting container has been filled.

## Revendications

1. Dispositif pour la séparation et la captation sécurisée de particules, qui doivent être séparées d'un gaz brut contenant des particules, dans lequel, dans un récipient collecteur (2), est disposé au moins un élément filtrant (1) avec un milieu filtrant conçu pour la séparation des particules, en outre, sur le récipient collecteur, au niveau de sa paroi frontale supérieure, est disposé un premier élément de raccordement et de fermeture combiné (3) pour l'entrée du gaz brut contenant des particules et un deuxième élément de raccordement et de fermeture combiné (4) pour la sortie du gaz exempt de particules, de façon à ce que l'au moins un élément filtrant (1) avec un milieu filtrant soit disposé entre l'entrée du gaz brut avec le premier élément de raccordement et de fermeture combiné (3) et la sortie du gaz exempt de particules avec le deuxième élément de raccordement et de fermeture combiné (4) et une conduite pour l'entrée du gaz brut peut être fixée de manière amovible au premier élément de raccordement et de fermeture combiné (3) et une conduite pour la sortie du gaz exempt de particules peut être fixée de manière amovible au deuxième élément de raccordement et de fermeture combiné (4),
**caractérisé en ce que**
les premier et deuxième éléments de raccordement et de fermeture combinés (3, 4) sont conçus et/ou dimensionnés de manière différente.

2. Dispositif selon la revendication 1, **caractérisé en ce que** l'au moins un élément filtrant (1) est conçu comme une cartouche filtrante et le deuxième élément de raccordement et de fermeture combiné (4) débouche à l'intérieur de l'élément filtrant (1).

3. Dispositif selon l'une des revendications précédentes, **caractérisé en ce que** le gaz brut est dirigé de manière tangentielle vers l'intérieur du récipient collecteur (2) par l'intermédiaire du premier élément de raccordement et de fermeture combiné (3).

4. Dispositif selon l'une des revendications précédentes, **caractérisé en ce qu'**un raccord (5) avec une buse est disposé sur le récipient collecteur (2) de façon à ce qu'un nettoyage par impulsions de pression du milieu filtrant puisse être réalisé.

5. Dispositif selon l'une des revendications précédentes, **caractérisé en ce que** les premier et deuxième éléments de raccordement et de fermeture combinés (3, 4) sont conçus comme un raccord kamlock.

6. Dispositif selon l'une des revendications précédentes, **caractérisé en ce que**, sur le fond du récipient collecteur (2) sont disposé(e)s au moins deux rouleaux ou roues (7).

7. Dispositif selon l'une des revendications précédentes, **caractérisé en ce qu'**au moins un capteur de niveau de remplissage (6), en particulier au moins un capteur capacitif, est disposé sur le récipient de collecteur (2).

8. Dispositif selon l'une des revendications précédentes, **caractérisé en ce que**, avec l'au moins un capteur de niveau de remplissage, un signal peut être généré lorsqu'un niveau de remplissage prédéterminé est atteint.

9. Dispositif selon l'une des revendications précédentes, **caractérisé en ce que**, au premier élément de raccordement et de fermeture combiné (3) ou à un troisième élément de raccordement et de fermeture combiné, qui est disposé sur le récipient collecteur (2), peut être raccordée une conduite avec laquelle, lorsque le récipient collecteur est rempli, un milieu inerte peut être introduit dans le récipient collecteur (2).
